(19) Europäisches Patentamt / European Patent Office / Office européen des brevets

(11) **EP 3 547 570 B1**

(12) **EUROPEAN PATENT SPECIFICATION**

(45) Date of publication and mention
of the grant of the patent:
**03.04.2024  Bulletin 2024/14**

(21) Application number: **18165043.3**

(22) Date of filing: **29.03.2018**

(51) International Patent Classification (IPC):
**H04B 10/112** *(2013.01)*

(52) Cooperative Patent Classification (CPC):
**H04B 10/1123**

(54) **ALIGNMENT IN FREE-SPACE OPTICAL NETWORKS**

AUSRICHTUNG IN OPTISCHEN FREIRAUMNETZWERKEN

ALIGNEMENT DANS DES RÉSEAUX OPTIQUES EN ESPACE LIBRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.10.2019  Bulletin 2019/40**

(73) Proprietor: **Nokia Technologies Oy
02610 Espoo (FI)**

(72) Inventor: **PIETILÄINEN, Antti Olavi
02610 Espoo (FI)**

(74) Representative: **Bryers Intellectual Property Ltd
Bristol & Bath Science Park
Dirac Crescent, Emerson's Green
Bristol, BS16 7FR (GB)**

(56) References cited:
WO-A1-2012/109248     DE-A1-102016 111 980
US-A1- 2004 120 719     US-B1- 6 590 685

**Description**

TECHNICAL FIELD

Aspect relate, in general, a method and system for alignment in a free-space optical network.

BACKGROUND

Free-space optical (FSO) links utilise light propagating in free space (e.g. air, outer space and so on) to wirelessly transmit data. In order to avail of useful link spans between nodes forming a link in a FSO network, whilst maintaining a loss margin for environmental factors, such as fog, and other factors that can cause signal attenuation, the links should transmit at an adequate power and use narrow beams to minimize geometric power loss. If a very narrow beam is used, a lower-cost radiation source can be used, as well as a smaller receiving aperture.

However, in this case, active link alignment is required. Moreover, if the link is intended to be installed on poles that sway due to wind, the active alignment must react quickly to, and compensate for, both linear and angular movement.

German patent application DE 1020161 1 1980A1 discloses a system for wireless transmission of data by means of an optical carrier signal between an optical transmitter and an optical receiver. International patent application WO2012/ 109248A1 discloses a system provides a mobile, full bi-directional, free-space optical (FSO) network providing networkability and internet connectivity.

SUMMARY

According to an example, there is provided a method for aligning a line of sight between a first apparatus and a second apparatus, the first apparatus comprising an access node including a first transceiver capable of multi-angle, bi-directional line-of-sight optical communications, the method comprising adjusting the positioning of the first transceiver to spatially modulate a sensitivity profile thereof according to a first predetermined periodic modulation profile, correlating a modulated radiation signal received at the first apparatus from the second apparatus using respective correlation functions for horizontal and vertical alignment errors to generate a first alignment error vector, and using the first alignment error vector for adjusting the line of sight of the first apparatus. The beam direction of the second apparatus can be modulated using a second modulation frequency. The modulated radiation signal received at the first apparatus from the second apparatus can be correlated using the second modulation frequency. The method can further comprise modulating a beam direction of the first apparatus according to a first predetermined modulation profile, correlating a modulated radiation signal received at the second apparatus from the first apparatus using the respective correlation functions for horizontal and vertical alignment errors to generate a second alignment error vector, and using the second alignment error vector, adjusting the line of sight of the first apparatus. The beam direction of the first apparatus can be modulated using a first modulation frequency. The modulated radiation signal received at the second apparatus from the first apparatus can be correlated using the second modulation frequency. The correlation functions can be sinusoidal functions with the same frequency and phase as the first or second predetermined modulation profiles. At least one of the first and second modulation profiles can be a circular modulation profile. The method can further comprise determining misalignment of the second apparatus by correlating, using the first apparatus, a received signal with the second modulation frequency.

According to an example, there is provided a free-space optical network comprising an access node in bi-directional communication with the network, the access node including a first transceiver capable of multi-angle, bi-directional line-of-sight optical communications, a second node including a second transceiver, wherein the second node is positioned within a line-of-sight of the access node, the second node providing network connectivity for user equipment, and a processing and control module configured to maintain line-of-sight between the access node and the second node by modulating the positioning of the first transceiver to spatially modulate a sensitivity profile thereof according to a first predetermined periodic modulation profile, correlating a modulated radiation signal received at the access node from the second node using respective correlation functions for horizontal and vertical alignment errors to generate a first alignment error vector, and using the first alignment error vector for adjusting the line of sight of the access node. The processing and control module can modulate the positioning of the first transceiver according to a circular modulation profile with a modulation amplitude that is smaller than the width of a sensitivity curve of the first transceiver. The processing and control module can modulate the positioning of the first transceiver at a first modulation frequency. The processing and control module can modulate the positioning of the second transceiver at a second modulation frequency according to a second predetermined modulation profile. The first, $f_A$, and second, $f_B$, modulation frequencies can be selected such that $f_A/f_B = n/m$, where $n \neq m$ are integer values.

According to an example

there is provided a system for aligning a line of sight between a first apparatus and a second apparatus, the first apparatus comprising an access node including a first transceiver capable of multi-angle, bi-directional line-of-sight optical communications, the system comprising means to adjust the positioning of the first transceiver to spatially modulate a sensitivity profile thereof according to a first predetermined periodic modulation profile, means to correlate a modulated radiation signal received at the first apparatus from the second apparatus using respective correlation functions for horizontal and vertical alignment errors to generate a first alignment error vector, and means to adjust the line of sight of the first apparatus using the first alignment error vector.

BRIEF DESCRIPTION OF THE DRAWINGS

Embodiments will now be described, by way of example only, with reference to the accompanying drawings, in which:

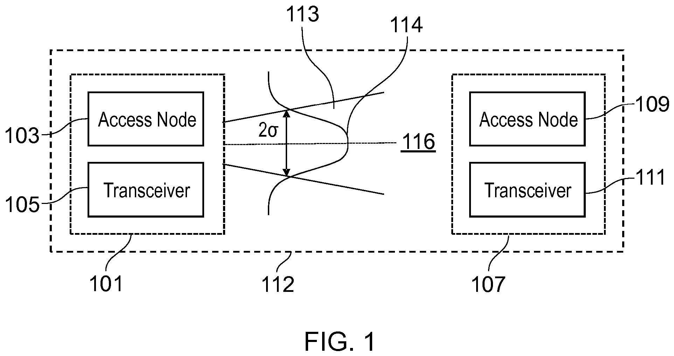

Figure 1 is a schematic representation of a pair of nodes according to an example;
Figure 2 is a schematic representation of the relative position of a first apparatus with respect to a second apparatus in a spherical coordinate system according to an example;
Figure 3 is a schematic representation depicting modulation of a reception cone of an aligned first apparatus with respect to a second apparatus according to an example;
Figure 4 is graph depicting how received radiation is modulated according to an example;
Figure 5 is a schematic representation depicting modulation of a misaligned reception cone of a first apparatus according to an example;
Figure 6 is a schematic representation depicting the modulation of a misaligned reception cone according to an example;
Figure 7 is a graph depicting how received radiation is modulated according to an example;
Figure 8 is a schematic representation depicting misalignments and corresponding estimated misalignments according to an example;
Figure 9 is a graph depicting how received radiation is modulated according to an example;
Figure 10 is a schematic representation of the misalignment of a first apparatus' receiving cone and measured misalignment according to an example; and
Figure 11 is a 1-dimensional mapping curve for a horizontal direction according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

According to an example, there is provided a method that can be applied after FSO link heads or nodes have been coarsely aligned. A coarse alignment means that, in examples, each node that is part of a pair of nodes in a FSO network receives a detectable amount of radiation from the other end (node) of the link that can be used to perform a finer grained alignment and keep the nodes aligned even if they move or turn, for example due to sway of a pole onto which the link head is mounted.

According to an example, a node can modulate the direction or positioning of its beam. A received modulated signal at another node can be used to measure misalignment between the pair without disturbing the corresponding measurement at the other end, and without communication with the other end. Moreover, in an example, the measurement scheme involves a frequency-selective correlation function. Accordingly, there is noise reduction. In an example, a node forming one part of an FSO link can be an access node that can be used by user equipment to connect to a network, such as a telecommunications network for example.

In an example, quantitative information about where the largest intensity (of a received signal) resides is provided. The information includes direction and also how large an angle must be turned to achieve the largest (i.e. most powerful) reception at a node.

According to an example, nodes can transmit radiation in the same direction as it is received from. That is, the nodes can be bidirectional. The divergence and intensity profile of a transmitted beam and the angular response of a receiver sensitivity can be similar, although not necessarily identical. In an example, a Gaussian sensitivity profile can be used as a function of misalignment, although other sensitivity profiles may be used.

Figure I is a schematic representation of a pair of nodes according to an example. In the example of figure I a first apparatus (A) 101 comprises an access node 103 including a first transceiver 105 capable of multi-angle, bi-directional line-of-sight optical communications. A second apparatus 107 is provided. In the example of figure I, the second apparatus also comprises an access node 109 including a second transceiver 111 capable of multi-angle, bi-directional line-of-sight optical communications. As a pair, the first apparatus and the second apparatus form a link 112 in an FSO network.

The first apparatus can receive radiation incident on the transceiver 105 from within a reception cone 113. The sensitivity profile 114 of the reception cone 113 is largest in the centre 116 of the cone and decreases toward the edges of the cone. In an example, the angular radius $\sigma$ of the cone can be described as the angle where the sensitivity of the reception has dropped to $1/e^2$ of the maximum.

According to an example, the first apparatus 101 modulates the positioning of the reception cone 113. The direction of transmission from the first apparatus is modulated similarly since the beam is bidirectional. In an example, the modulation is circular, although it can take various other forms.

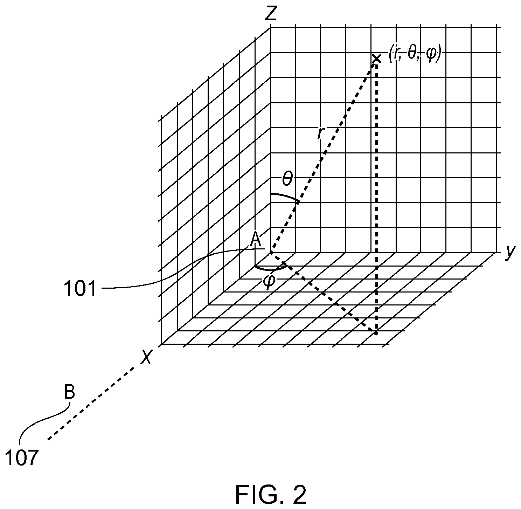

Referring to figure 2, which is a schematic representation of the relative position of the first apparatus 101 with respect to the second apparatus 107 in a spherical coordinate system, the first apparatus is located at the origin and the second apparatus is location along the x axis. Thus, the direction of the second apparatus as seen from the first apparatus is $\phi=0$, $\theta=\pi/2$.

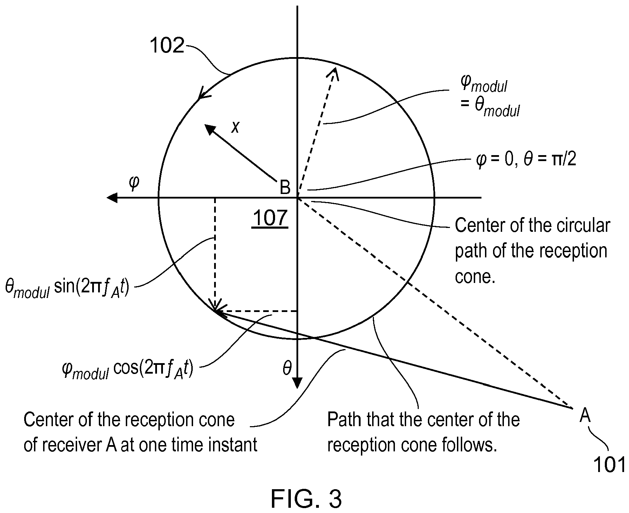

Referring to figure 3, if the alignment of the first apparatus' reception cone were perfect, it would point at $\phi=0$, $\theta=\pi/2$. If the reception cone 113 is circularly modulated around perfect alignment, thereby generating a circular path 102 of the centre of the reception cone, the direction, as a function of time, that the reception cone 113 points to can be represented as:

$$\varphi(t) = \varphi_{modul} \, \cos(2\pi f_A t)$$

$$\theta(t) = \theta_{modul} \, \sin(2\pi f_A t) + \pi/2$$

where the modulation amplitudes $\phi_{modul}$ and $\theta_{modul}$ can be equal to create circular modulation. In an example, the modulation frequency is $f_A$ and time is t.

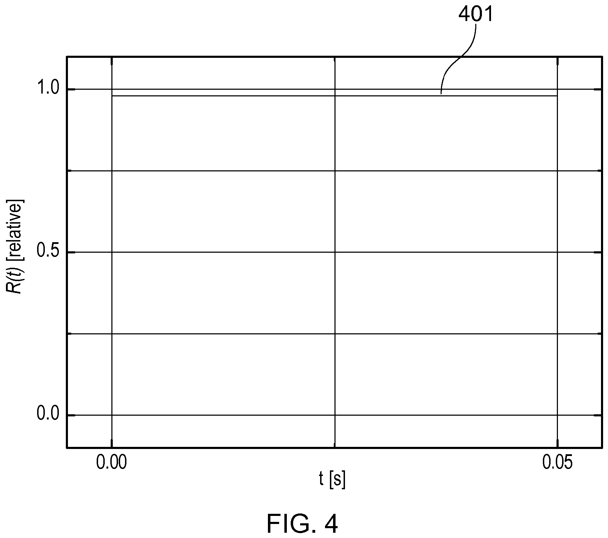

Referring to figure 4, if the alignment between the first apparatus and the second apparatus is perfect or near to perfect, then a negligible modulation in light intensity would be expected because the centre of the sensitivity curve circulates symmetrically around the centre of the radiation source.

According to an example, the modulation amplitudes are adequately smaller than the width of the sensitivity curve so that the modulation does not reduce the reception of the received radiation R(t) too much. For example, $\phi_{modul}$ (and $\theta_{modul}$) is $\sigma/10$ where the $1/e^2$ radius of the sensitivity curve is $\sigma$. The response curve is approximated with a Gaussian sensitivity profile.

According to an example, when adding alignment error, the direction of the reception cone of A is defined as:

$$\varphi(t) = \varphi_{modul} \, \cos(2\pi f_A t) + \varphi_{err}$$

$$\theta(t) = \theta_{modul} \, \sin(2\pi f_A t) + \pi/2 + \theta_{err}$$

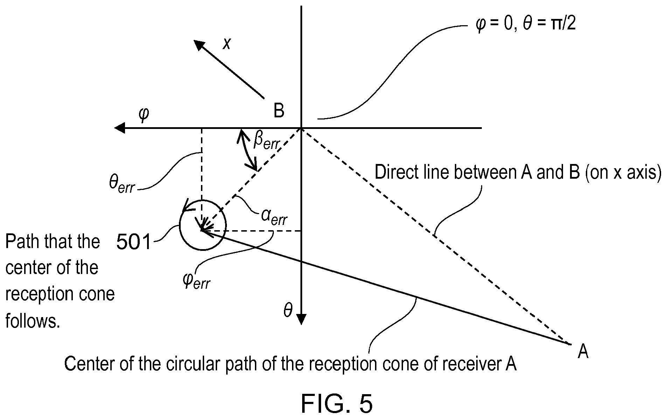

With reference to figure 5, which is a schematic representation of the relative positioning of the first apparatus with respect to the second apparatus of figure 2, the variables $\phi_{err}$ and $\theta_{err}$ are the horizonal and vertical alignment error angles.

The total alignment error $\alpha_{err}$ and the direction $\beta_{err}$ of the alignment error are also shown. The total alignment error $\alpha_{err}$ is an angle in the spherical coordinate system and is defined (assuming that $\phi_{err}$ and $\theta_{err}$ are small) as:

$$\propto_{err} = \sqrt{\varphi_{err}{}^2 + \theta_{err}{}^2}.$$

Angle $\beta_{err}$ is not an angle in the spherical coordinate system, but is the direction of the misalignment from the second apparatus (B), as perceived by a viewer at the first apparatus (A), and is defined as:

$$\beta_{err} = \tan^{-1} \frac{\theta_{err}}{\varphi_{err}}.$$

In an example, it is convenient to express the angles $\phi$, $\theta$, and $\alpha$ in radians, and to express $\beta$ in degrees. The quadrant of $\beta_{err}$ is specified in Table 1, below, as a function of the signs of $\phi_{err}$ and $\theta_{err}$:

Table 1

| $\varphi_{err}$ | $\theta_{err}$ | $\beta_{err}$ |
|---|---|---|
| + | + | 0°...90° |
| - | + | 90°...180° |
| + | - | 0°...-90° |
| - | - | -90°...-180° |

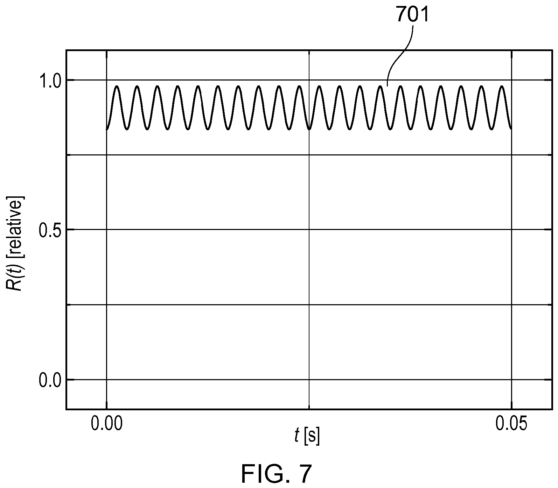

In this case a modulated pattern occurs. For example, if $\theta_{err}$ = σ/5 and $\theta_{err}$ = 0, i.e. $\alpha_{err}$ = σ/5 and $\beta_{err}$ = 0°, then the received radiation $R(t)$ is modulated 701 as shown in figure 7.

According to an example, a received modulation of radiation intensity is processed by correlating the received signal $R(t)$ with a sinusoidal signal that is at the same frequency and phase as the modulation signal, i.e. cosine for the horizontal and sine for the vertical misalignment. Consequently, the correlation integrals for the horizontal ($E_\phi$) and vertical (Ee) alignment error signals are:

$$E_\varphi = - \int_0^{t_{corr}} R(t) \cos(2\pi f_A t) dt$$

and

$$E_\theta = - \int_0^{t_{corr}} R(t) \sin(2\pi f_A t) dt \,,$$

respectively. In an example, the correlation integral is calculated over a duration $t_{corr}$ of an integer number $n$ of modulation cycles of duration $1/f_A$, i.e. $t_{corr} = n/f_A$. In order to compare the misalignment to the outcome of the correlation integrals, minus signs are inserted in the integrals above so that the results correspond to the direction of the alignment error rather than the direction where the beam should be realigned to remove the error. Thus, $E_\varphi$ indicates the magnitude and direction (+/-) of the horizontal alignment error and $E_\theta$ the magnitude and direction (+/-) of the vertical alignment error. The numerical values depend on the level of received radiation, modulation amplitude, as well as the location of the radiation source on the sensitivity curve of receiver.

According to an example, $E_\varphi$ and $E_\theta$ can also be determined using low-pass filtering of the correlated signal:

$$E_\varphi = -\text{LPF}\big(R(t)\cos(2\pi f_A t)\big)$$

$$E_\delta = -\text{LPF}\big(R(t)\sin(2\pi f_A t)\big)$$

where LPF() is a low-pass filtering function. The frequency $f_B$ is described further below.

According to an example, the total magnitude of the alignment error signal is:

$$E_{tot} = \sqrt{E_\varphi{}^2 + E_\theta{}^2}$$

If the receiver sensitivity curve is Gaussian and the directional modulation is small compared to the width of the sensitivity curve, an estimate of the magnitude of the alignment error, $\alpha_{err\_est}$, can be determined:

$$\alpha_{err\_est} = \frac{kE_{tot}}{R}$$

where $k$ is an empirically determined constant and $R$ is the average received power during the misalignment measurement. For determining the value of the constant, the beam could be intentionally misaligned in a stable environment that eliminates other mechanisms causing misalignment. At a misalignment of $\alpha_{err}$, $k$ should be set to a value such that $\alpha_{err\_est}$ = $\alpha_{err}$

According to an example, an estimate of the direction of the alignment error, $\beta_{err\_est}$, is given by:

$$\beta_{err\_est} = \tan^{-1} \frac{E_\varphi}{E_\theta} \,,$$

The same rule for the determination of the quadrant applies as when determining $\beta_{err}$, as shown in Table 2 below.

Table 2.

| $E_\varphi$ | $E_\theta$ | $\beta_{err\_est}$ |
|---|---|---|
| + | + | 0°...90° |
| - | + | 90°...180° |
| + | - | 0°...-90° |
| - | - | -90°...-180° |

Figure 5 is a schematic representation depicting modulation of the reception cone of the first apparatus according to an example. In the example of figure 5 there is misalignment. As shown in figure 5, the path that the centre of the cone follows, 501, is depicted. This is the same as the circular path 102 of figure 3.

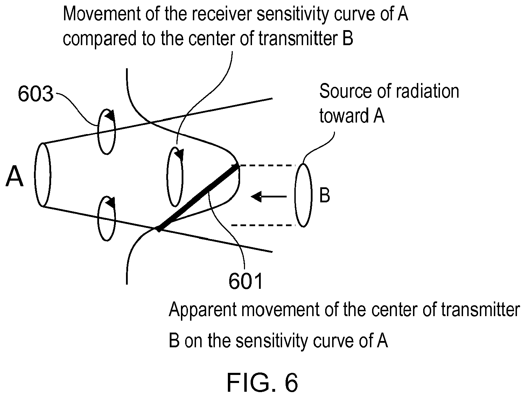

Figure 6 is a schematic representation depicting the modulation of a misaligned beam according to an example. Movement of the receiver sensitivity profile of A according to a predetermined modulation profile 603 (compared to the centre of transmitted B) is depicted. In the example shown in figure 6, if $\varphi_{err}$ = σ/5 and $\theta_{err}$ = 0, i.e. $\alpha_{err}$ = σ/5 and $\beta_{err}$ = 0°, for example, then the received radiation $R(t)$ is modulated resulting in a modulated pattern 701 as shown in figure 7.

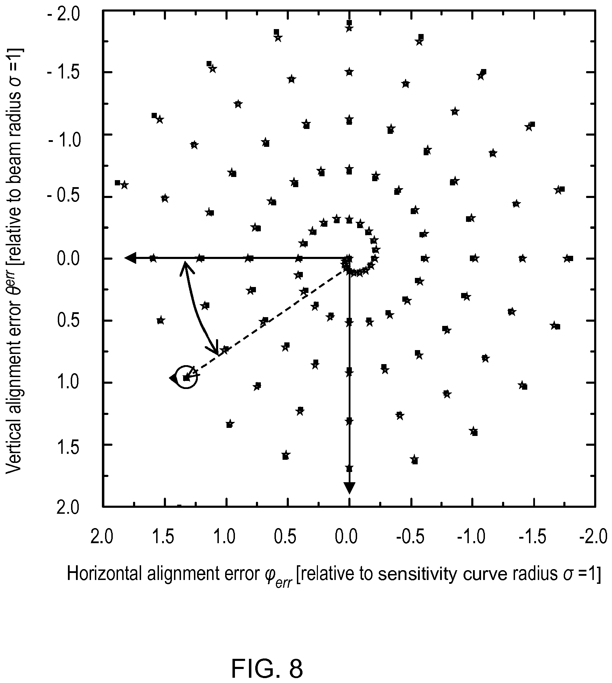

Figure 8 is a schematic representation depicting misalignments and corresponding estimated misalignments according to an example. In the example of figure 8, a Gaussian sensitivity profile has been used. Each black square represents one of 100 different misalignment parameter pairs ($\alpha_{err}$, $\beta_{err}$) that have been tried. At each location, the direction of the reception cone of the first apparatus has been modulated, as shown examplewise by the small circle at location ($\alpha_{err}$ = 1.64, $\beta_{err}$ =

36°), to produce $R(t)$. The correlation integrals described above have been then used to determine $E_\varphi$ and $E_\theta$. Finally, estimates of the misalignment ($\alpha_{err\ est}$, $\beta_{err\ est}$) were obtained using the equations described above. The estimates of the misalignments are shown as stars in figure 8. Thus, a single determination of misalignment provides the information that enables alignment to the direction of maximum received radiation with a single adjustment action.

According to an example, the second apparatus can modulate its reception cone's direction, and correspondingly transmitted beam in a similar way to the first apparatus to accomplish alignment. Since the beam direction is modulated the received light at the first apparatus is affected. If both link heads are misaligned, both modulations will cause variations in the received radiation at the first apparatus.

According to an example, in case of using the correlation integrals, the modulation frequencies and correlation time for misalignment measurements are selected so that the first apparatus can isolate the effect of modulation at the second apparatus and detect the effect of the first apparatus' modulation. This can be accomplished by defining the parameters in such a way that:

$$t_{corr} = n/f_A = m/f_B$$

holds, where $f_{corr}$ is the correlation time, $n \neq m$ are integer values, $f_A$ is the modulation frequency of the first apparatus, and $f_B$ is the modulation frequency of the second apparatus. For example, $t_{corr} = 0.05$ s, $n = 20$, $m = 21$, $f_A = 400$ Hz, and $f_B = 420$ satisfies the equation. The correlation time determines how rapidly adjustments can be carried out to the alignment, i.e. in this case 20 adjustments per second. If a higher rate is required, then the parameter values could be adjusted. For example, $t_{corr} = 0.0025$ s, $n = 10$, $m = 11$, $f_A = 400$ Hz, and $f_B = 440$ Hz would allow making 40 adjustments per second. On the other hand, the noise filtering capability of the correlation function would correspondingly drop to half.

In case of using the low-pass filtering functions LPF() instead of the correlation integrals, the first apparatus can isolate the effect of the modulation of the second apparatus by selecting a cut-off frequency of the low-pass filter to a value that is on the order of $|f_B - f_A|$ or less.

In an alternative example, the reception of the first apparatus is misaligned by, for example, $\alpha_{err} = 0.2\sigma$ and $\beta_{err} = 0°$, but the second apparatus is also misaligned and modulated, potentially disturbing the first apparatus' measurement. In this example, the misalignment of the second apparatus' transmitted beam is $\alpha_{errB} = 0.3\sigma$ and $\beta_{errB} = 45°$ (using the same coordinate space). The spatial modulation frequency of the first apparatus' reception cone (and transmit beam) is $f_A = 400$ Hz. If the second apparatus uses the same direction of circular modulation as the first, but from the opposite direction, the sign is reversed in the first apparatus' coordinate space, and correspondingly the second apparatus' modulation frequency has a minus sign $f_B = -420$ Hz. The correlation time $t_{corr}$ is 0.05 s, $n = 20$, and B $m = 21$.

Since both ends of the link formed by the first and second apparatus should be able to operate independently of each other, they can use, in an example (and at least initially), their own oscillators to create the modulation frequency. The modulation of the second apparatus can therefore be based on a different frequency source than that of the first apparatus. In telecommunications, oscillators can have around 100 ppm frequency error and therefore a 200 ppm difference can be assumed as a maximum difference between two sides of a link in a FSO network. Therefore, a frequency reference difference of 200 ppm has been used in the following.

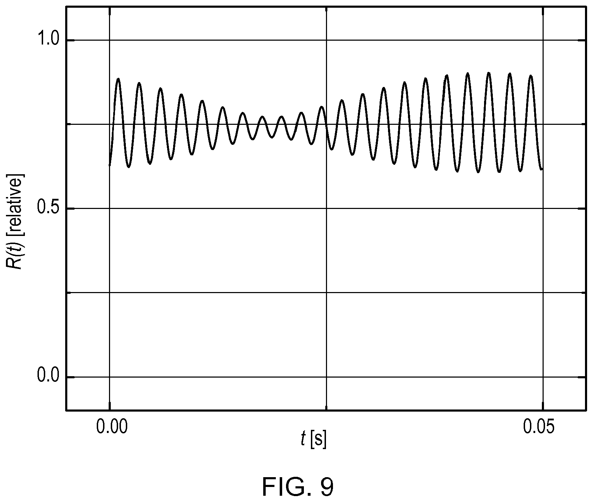

Figure 9 shows an example of radiation measurement $R(t)$ with the modulation parameters used above with reference to figure 8. The sensitivity curve of the first apparatus and beam intensity profile of the second apparatus are assumed to have the same radius $\sigma$.

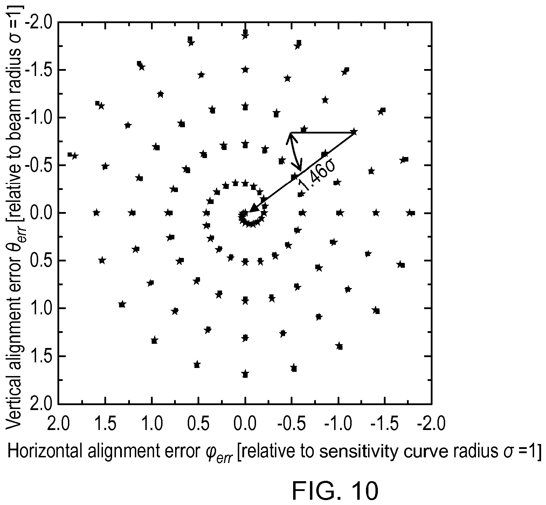

Misalignment of the first apparatus was then tried at the same 100 different values of ($\alpha_{err}$, $\beta_{err}$) as in figure 8. This is shown in figure 10, which shows misalignment of the first apparatus' receiving cone (black squares) and measured misalignment (stars). The opposing beam of the second apparatus is misaligned by $\alpha_{errB} = 0.3\sigma$ and $\beta_{errB} = 45°$. The modulation frequency of beam B is -420 Hz, and further, the frequency base of the second apparatus is 200 ppm different than the first apparatus'. The modulation of the second apparatus causes small errors but the errors are so small that it is difficult to see any difference compared to the case of 6, without disturbance. Thus, if the determined misalignment is, for example ($\alpha_{err} = 1.46\sigma, \beta_{err} = -126°$) then a corrective action can be made, which removes the error almost completely.

Examples have thus far been described from the viewpoint of aligning the reception of the first apparatus, which also aligns its transmission towards the second apparatus. In an example, the second apparatus can align its own receiver using the same method. A difference is that the second apparatus can modulate the direction of reception and correlates the received radiation using a different modulation frequency $f_B$, e.g. 420 Hz. Since the two ends of the link use different modulation frequencies, there should be a mechanism to make sure that each end uses a different modulation frequency. In the case of bidirectional beams for example, which use different optical wavelengths in each direction, the modulation frequency could be associated with the optical wavelength.

As a result of the operation described above, the two ends of a link in an FSO network can measure and fix their own misalignments independently and simultaneously, without disturbing each other, and without inter-node communication.

According to an example, one or both link heads in a FSO optical link can modulate the direction of the reception cone (and transmitted beam) in two dimensions $\varphi$ and $\theta$ to excite small periodic variations in the received radiation at the other side of the link that can be used to reveal the direction and magnitude of misalignment. The link heads use a different modulation frequency.

The received radiation is correlated independently in both link heads using two correlation integrals, one representing a first dimension, e.g. horizontal misalignment, and the other representing a second dimension, e.g. vertical misalignment. Each link head can use its own modulation frequency to correlate the received radiation, and the phase of the correlation function is aligned with the modulation. The modulation frequencies and integration time in the correlation integral are selected so that during the integration time both modulations experience an approximately integer, but different number of periods.

The ratio of the obtained values is used to estimate the direction of the misalignment. The obtained values can be further normalized using the average received radiation for estimating the magnitude of the misalignment. The alignment actuators of the FSO units compensate the misalignments.

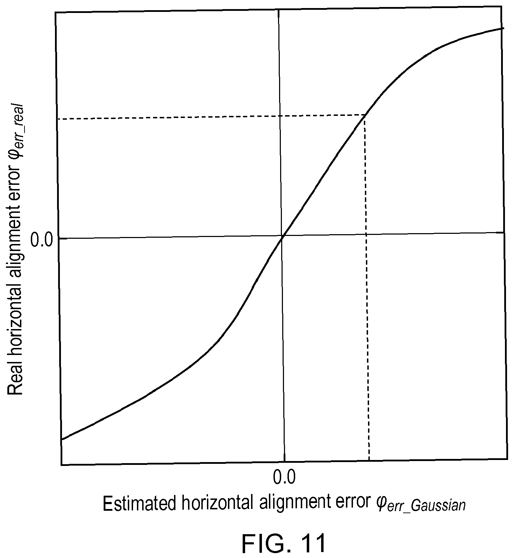

If the sensitivity curve of the receiver is not Gaussian, an optical bench could be used to create mapping curves between the estimated and real misalignment. As an example, figure 11 shows a I-dimensional mapping curve for the horizontal direction. The dashed lines indicate how an estimate of misalignment on the bottom axis can be mapped to a real value on the left axis.

Another curve can be created for the other dimension. These two curves may be adequate, but in some examples, a 2-dimensional mapping curve, i.e. mapping surface for mapping of any ($\varphi_{err\ Gaussian}$, $\theta_{err\ Gaussian}$) pair to the corresponding to ($\varphi_{err\ real}$, $\theta_{err\ real}$) can be used.

The mapping curves could be created also as a part of initialization sequence. At start up, after reaching alignment using, for example an iterative search, a link head can create the mapping curves by scanning over different angles to create the mapping curves or surface.

In an example, if communication between nodes is available, both ends can also detect the direction and magnitude of the misalignment of the opposite beam and communicate the information to the opposite end for fine tuning the alignment. For example, the detection can be accomplished by correlating the received signal with a signal that is at the same frequency and phase as the modulation of the beam direction of the opposite end. Accordingly, one node can detect the misalignment of the other node in the link without its own receiving cone modulation disturbing the measurement. Moreover, it can carry out the determination using the same input signal that it uses to determine its own misalignment and can consequently carry out the two independent measurements at the same time. In order to carry out the measurement at the first apparatus, the second apparatus can communicate the phase of the modulation to the first apparatus. The timing accuracy can be on the order of 0.1 ms depending on the modulation frequency. The same link could also be used to synchronize the reference frequencies.

If there is synchronization between the ends so that the measurement periods occur at the same time and the adjustments to the direction of the beams would happen between them, an adjustment at one end would not disturb the accuracy of the measurement at the other end.

According to an example, a similar scheme could be used with two-beam systems. The reception cones of nodes making up a link can be modulated at frequency $f_{rec}$ and transmit beams at frequency $f_{tr}$. The misalignments of the reception cones could be measured using correlation frequency $f_{rec}$. This information can then be used to adjust the direction of the reception, as well as transmission of the local end (the direction of the reception cone and transmitted beam would have been aligned to be parallel during manufacturing for example). When communication between the two ends is enabled, the receivers can report the remaining misalignment of the transmitted beams by correlating the received signal using frequency $f_{tr}$. This information can then be used to fine-tune the direction of the transmitter. In an example, if the received power at a node is too high, thereby overloading the receiver, then the node can intentionally misalign to reduce the power to an acceptable level. Furthermore, the horizontal and vertical modulations of one end have the same frequency but exhibit a $\pi/2$ phase difference. Different frequencies could be used as long as the frequencies are selected in a similar way. Furthermore, the modulation amplitudes $\varphi_{modul}$ and $\theta_{modul}$ could be different. This might be useful if the sensitivity curve of the receiver or the transmitted beam is not circularly symmetric.

The described embodiments are to be considered in all respects as illustrative and not restrictive. In particular, the scope of the invention is indicated by the appended claims rather than by the description and figures herein.

## Claims

1. A method for aligning a line of sight between a first apparatus (101) and a second apparatus (107), the first apparatus (101) comprising an access node (103) including a first transceiver (105) capable of multi-angle, bi-directional line-of-sight optical communications, the method comprising:

   adjusting the positioning of the first transceiver (105) to spatially modulate a sensitivity profile according to a first predetermined periodic modulation profile;
   correlating a modulated radiation signal received at the first apparatus (101) from the second apparatus (107) using respective correlation functions for horizontal and vertical alignment errors to generate a first alignment error vector; and

using the first alignment error vector for adjusting the line of sight of the first apparatus.

2. A method as claimed in claim 1, wherein the beam direction of the second apparatus (107) is modulated using a second modulation frequency.

3. A method as claimed in claim 2, further comprising correlating the modulated radiation signal received at the first apparatus (101) from the second apparatus (107) using the second modulation frequency.

4. A method as claimed in any preceding claim, further comprising:

modulating a beam direction of the first apparatus (101) according to a first predetermined modulation profile;
correlating a modulated radiation signal received at the second apparatus (107) from the first apparatus (101) using the respective correlation functions for horizontal and vertical alignment errors to generate a second alignment error vector; and
using the second alignment error vector, adjusting the line of sight of the first apparatus.

5. A method as claimed in claim 4, wherein the beam direction of the first apparatus (101) is modulated using a first modulation frequency.

6. A method as claimed in claim 4, further comprising correlating the modulated radiation signal received at the second apparatus from the first apparatus using the second modulation frequency.

7. A method as claimed in any preceding claim, wherein the correlation functions are sinusoidal functions with the same frequency and phase as the first or second predetermined modulation profiles.

8. A method as claimed in any preceding claim, wherein at least one of the first and second modulation profiles is a circular modulation profile.

9. A method as claimed in any preceding claim, further comprising:
determining misalignment of the second apparatus by correlating, using the first apparatus, a received signal with the second modulation frequency.

10. A free-space optical network comprising:

an access node (103) including a first transceiver (105) capable of multi-angle, bi-directional line-of-sight optical communications;
a second node (107) including a second transceiver (111), wherein the second node is positioned within a line-of-sight of the access node, the second node to provide network connectivity for user equipment; and
a processing and control module to maintain line-of-sight between the access node (103) and the second node (107), configured to:

modulate the positioning of the first transceiver to spatially modulate a sensitivity profile according to a first predetermined periodic modulation profile;
correlate a modulated radiation signal received at the access node from the second node using respective correlation functions for horizontal and vertical alignment errors to generate a first alignment error vector; and
use the first alignment error vector for adjusting the line of sight of the access node.

11. A free-space optical network as claimed in claim 10, wherein the processing and control module is configured to modulate the positioning of the first transceiver (105) according to a circular modulation profile with a modulation amplitude that is smaller than the width of a sensitivity curve of the first transceiver.

12. A free-space optical network as claimed in claim 10 or 11, wherein the processing and control module is configured to modulate the positioning of the first transceiver (105) at a first modulation frequency.

13. A free-space optical network as claimed in claim 12, wherein the processing and control module is configured to modulate the positioning of the second transceiver (111) at a second modulation frequency according to a second predetermined modulation profile.

14. A free-space optical network as claimed in claim 13, wherein the first, $f_A$, and second, $f_B$, modulation frequencies are selected such that $f_A/f_B = n/m$, where $n \neq m$ are integer values.

15. A system for aligning a first apparatus and a second apparatus, the first apparatus comprising an access node including a first transceiver capable of multi-angle, bi-directional line-of-sight optical communications, the system comprising:

means to adjust the positioning of the first transceiver to spatially modulate a sensitivity profile thereof according to a first predetermined periodic modulation profile;

means to correlate a modulated radiation signal received at the first apparatus from the second apparatus using respective correlation functions for horizontal and vertical alignment errors to generate a first alignment error vector; and means to adjust the line of sight of the first apparatus using the first alignment error vector.

**Patentansprüche**

1. Verfahren zum Ausrichten einer Sichtlinie zwischen einer ersten Vorrichtung (101) und einer zweiten Vorrichtung (107), wobei die erste Vorrichtung (101) einen Zugangsknoten (103) umfasst, der einen ersten Sendeempfänger (105) beinhaltet, der zu einer mehrwinkligen bidirektionalen optischen Sichtlinienkommunikation in der Lage ist, wobei das Verfahren Folgendes umfasst:

   Anpassen der Positionierung des ersten Sendeempfängers (105), um ein Empfindlichkeitsprofil gemäß einem ersten vorbestimmten periodischen Modulationsprofil räumlich zu modulieren;
   Korrelieren eines modulierten Strahlungssignals, das an der ersten Vorrichtung (101) von der zweiten Vorrichtung (107) empfangen wird, unter Verwendung von jeweiligen Korrelationsfunktionen für horizontale und vertikale Ausrichtungsfehler, um einen ersten Ausrichtungsfehlervektor zu erzeugen; und
   Verwenden des ersten Ausrichtungsfehlervektors zum Anpassen der Sichtlinie der ersten Vorrichtung.

2. Verfahren nach Anspruch 1, wobei die Strahlrichtung der zweiten Vorrichtung (107) unter Verwendung einer zweiten Modulationsfrequenz moduliert wird.

3. Verfahren nach Anspruch 2, das ferner das Korrelieren des modulierten Strahlungssignals, das an der ersten Vorrichtung (101) von der zweiten Vorrichtung (107) empfangen wird, unter Verwendung der zweiten Modulationsfrequenz umfasst.

4. Verfahren nach einem der vorhergehenden Ansprüche, das ferner Folgendes umfasst:

   Modulieren einer Strahlrichtung der ersten Vorrichtung (101) gemäß einem ersten vorbestimmten Modulationsprofil;
   Korrelieren eines modulierten Strahlungssignals, das an der zweiten Vorrichtung (107) von der ersten Vorrichtung (101) empfangen wird, unter Verwendung der jeweiligen Korrelationsfunktionen für horizontale und vertikale Ausrichtungsfehler, um einen zweiten Ausrichtungsfehlervektor zu erzeugen; und
Verwenden des zweiten Ausrichtungsfehlervektors, Anpassen der Sichtlinie der ersten Vorrichtung.

5. Verfahren nach Anspruch 4, wobei die Strahlrichtung der ersten Vorrichtung (101) unter Verwendung einer ersten Modulationsfrequenz moduliert wird.

6. Verfahren nach Anspruch 4, das ferner das Korrelieren des modulierten Strahlungssignals, das an der zweiten Vorrichtung von der ersten Vorrichtung empfangen wird, unter Verwendung der zweiten Modulationsfrequenz umfasst.

7. Verfahren nach einem der vorhergehenden Ansprüche, wobei die Korrelationsfunktionen Sinusfunktionen mit einer selben Frequenz und Phase wie das erste oder das zweite vorbestimmte Modulationsprofil sind.

8. Verfahren nach einem der vorhergehenden Ansprüche, wobei mindestens eines des ersten und des zweiten Modulationsprofils ein kreisförmiges Modulationsprofil ist.

9. Verfahren nach einem der vorhergehenden Ansprüche, das ferner Folgendes umfasst:
   Bestimmen einer Fehlausrichtung der zweiten Vorrichtung durch Korrelieren eines empfangenen Signals mit der zweiten Modulationsfrequenz unter Verwendung der ersten Vorrichtung.

10. Optisches Freiraumnetzwerk, das Folgendes umfasst:

   einen Zugangsknoten (103), der einen ersten Sendeempfänger (105) beinhaltet, der zu einer mehrwinkligen bidirektionalen optischen Sichtlinienkommunikation in der Lage ist;
   einen zweiten Knoten (107), der einen zweiten Sendeempfänger (111) beinhaltet, wobei der zweite Knoten in der Sichtlinie des Zugangsknotens positioniert ist, wobei der zweite Knoten eine Netzwerkkonnektivität für eine Teilnehmereinrichtung bereitstellen soll; und
   ein Verarbeitungs- und Steuermodul zum Aufrechterhalten einer Sichtlinie zwischen dem Zugangsknoten (103) und dem zweiten Knoten (107), das zu Folgendem ausgelegt ist:

      Modulieren der Positionierung des ersten Sendeempfängers, um ein Empfindlichkeitsprofil gemäß einem ersten vorbestimmten periodischen Modulationsprofil räumlich zu modulieren;
      Korrelieren eines modulierten Strahlungssignals, das am Zugangsknoten vom zweiten Knoten empfangen wird, unter Verwendung von jeweiligen Korrelationsfunktionen für horizontale und vertikale Ausrichtungsfehler, um einen ersten Ausrichtungsfehlervektor zu erzeugen; und
Verwenden des ersten Ausrichtungsfehlervektors zum Anpassen der Sichtlinie des Zugangsknotens.

**11.** Optisches Freiraumnetzwerk nach Anspruch 10, wobei das Verarbeitungs- und Steuermodul dazu ausgelegt ist, die Positionierung des ersten Sendeempfängers (105) gemäß einem kreisförmigen Modulationsprofil mit einer Modulationsamplitude, die kleiner ist als die Breite einer Empfindlichkeitskurve des ersten Sendeempfängers, zu modulieren.

**12.** Optisches Freiraumnetzwerk nach Anspruch 10 oder 11, wobei das Verarbeitungs- und Steuermodul dazu ausgelegt ist, die Positionierung des ersten Sendeempfängers (105) mit einer ersten Modulationsfrequenz zu modulieren.

**13.** Optisches Freiraumnetzwerk nach Anspruch 12, wobei das Verarbeitungs- und Steuermodul dazu ausgelegt ist, die Positionierung des zweiten Sendeempfängers (111) gemäß einem zweiten vorbestimmten Modulationsprofil mit einer zweiten Modulationsfrequenz zu modulieren.

**14.** Optisches Freiraumnetzwerk nach Anspruch 13, wobei die erste, $f_A$, und die zweite $f_B$, Modulationsfrequenz derart ausgewählt sind, dass $f_A/f_B = n/m$, wobei $n \neq m$ ganzzahlige Werte sind.

**15.** System zum Ausrichten einer ersten Vorrichtung und einer zweiten Vorrichtung, wobei die erste Vorrichtung einen Zugangsknoten umfasst, der einen ersten Sendeempfänger beinhaltet, der zu einer mehrwinkligen bidirektionalen optischen Sichtlinienkommunikation in der Lage ist, wobei das System Folgendes umfasst:

Mittel zum Anpassen der Positionierung des ersten Sendeempfängers, um ein Empfindlichkeitsprofil davon gemäß einem ersten vorbestimmten periodischen Modulationsprofil räumlich zu modulieren;
Mittel zum Korrelieren eines modulierten Strahlungssignals, das an der ersten Vorrichtung empfangen wird, unter Verwendung von jeweiligen Korrelationsfunktionen für horizontale und vertikale Ausrichtungsfehler, um einen ersten Ausrichtungsfehlervektor zu erzeugen; und
Mittel zum Anpassen der Sichtlinie der ersten Vorrichtung unter Verwendung des ersten Ausrichtungsfehlervektors.

## Revendications

**1.** Procédé d'alignement d'une ligne de visée entre un premier appareil (101) et un deuxième appareil (107), le premier appareil (101) comprenant un noeud d'accès (103) comportant un premier émetteur-récepteur (105) en mesure d'assurer des communications optiques à ligne de visée multi-angle et bidirectionnelles, le procédé comprenant :

le réglage du positionnement du premier émetteur-récepteur (105) pour moduler spatialement un profil de sensibilité selon un premier profil de modulation périodique prédéterminé ;
la corrélation d'un signal de rayonnement modulé reçu du deuxième appareil (107) sur le premier appareil (101) à l'aide de fonctions de corrélation respectives pour les erreurs d'alignement horizontal et vertical, afin de générer un premier vecteur d'erreur d'alignement ; et
l'utilisation du premier vecteur d'erreur d'alignement pour régler la ligne de visée du premier appareil.

**2.** Procédé selon la revendication 1, dans lequel la direction de faisceau du deuxième appareil (107) est modulée à l'aide d'une deuxième fréquence de modulation.

**3.** Procédé selon la revendication 2, comprenant en outre la corrélation du signal de rayonnement modulé reçu du deuxième appareil (107) sur le premier appareil (101) à l'aide de la deuxième fréquence de modulation.

**4.** Procédé selon l'une des revendications précédentes, comprenant en outre :

la modulation d'une direction de faisceau du premier appareil (101) selon un premier profil de modulation prédéterminé ;
la corrélation d'un signal de rayonnement modulé reçu du premier appareil (101) sur le deuxième appareil (107) à l'aide des fonctions de corrélation respectives pour les erreurs d'alignement horizontal et vertical, afin de générer un deuxième vecteur d'erreur d'alignement ; et
à l'aide du deuxième vecteur d'erreur d'alignement, le réglage de la ligne de visée du premier appareil.

**5.** Procédé selon la revendication 4, dans lequel la direction de faisceau du premier appareil (101) est modulée à l'aide d'une première fréquence de modulation.

**6.** Procédé selon la revendication 4, comprenant en outre la corrélation du signal de rayonnement modulé reçu du premier appareil sur le deuxième appareil à l'aide de la deuxième fréquence de modulation.

**7.** Procédé selon l'une des revendications précédentes, dans lequel les fonctions de corrélation sont des fonctions sinusoïdales ayant la même fréquence et la même phase que le premier ou le deuxième profil de modulation prédéterminé.

**8.** Procédé selon l'une des revendications précédentes, dans lequel au moins un des premier et deuxième profils de modulation est un profil de modulation circulaire.

**9.** Procédé selon l'une des revendications précédentes, comprenant en outre :
la détermination d'un désalignement du deuxième appareil en corrélant, à l'aide du premier appareil, un signal reçu avec la deuxième fréquence de modulation.

**10.** Réseau optique en espace libre comprenant :
un noeud d'accès (103) comportant un premier émetteur-récepteur (105) en mesure d'assurer des communications optiques à ligne de visée multi-angle et bidirectionnelles :

un deuxième noeud (107) comportant un deuxième émetteur-récepteur (111), dans lequel le deuxième noeud est positionné dans une ligne de visée du noeud d'accès, le deuxième noeud fournissant une connectivité réseau pour un équipement utilisateur ; et
un module de traitement et de commande pour maintenir la ligne de visée entre le noeud d'accès (103) et le deuxième noeud (107), configuré pour :

moduler le positionnement du premier émetteur-récepteur pour moduler spatialement un profil de sensibilité selon un premier profil de modulation périodique prédéterminé ;
corréler un signal de rayonnement modulé reçu du deuxième noeud sur le noeud d'accès à l'aide de fonctions de corrélation respectives pour les erreurs d'alignement horizontal et vertical, afin de générer un premier vecteur d'erreur d'alignement ; et
utiliser le premier vecteur d'erreur d'alignement pour régler la ligne de visée du noeud d'accès.

**11.** Réseau optique en espace libre selon la revendication 10, dans lequel le module de traitement et de commande est configuré pour moduler le positionnement du premier émetteur-récepteur (105) selon un profil de modulation circulaire avec une amplitude de modulation inférieure à la largeur d'une courbe de sensibilité du premier émetteur-récepteur.

**12.** Réseau optique en espace libre selon la revendication 10 ou 11, dans lequel le module de traitement et de commande est configuré pour moduler le positionnement du premier émetteur-récepteur (105) à une première fréquence de modulation.

**13.** Réseau optique en espace libre selon la revendication 12, dans lequel le module de traitement et de commande est configuré pour moduler le positionnement du deuxième émetteur-récepteur (111) à une deuxième fréquence de modulation selon un deuxième profil de modulation prédéterminé.

**14.** Réseau optique en espace libre selon la revendication 13, dans lequel les première, $f_A$, et deuxième, $f_B$, fréquences de modulation sont choisies de telle sorte que $f_A/f_B = n/m$, où $n \neq m$ sont des valeurs entières.

**15.** Système d'alignement d'un premier appareil et d'un deuxième appareil, le premier appareil comprenant un noeud d'accès comportant un premier émetteur-récepteur en mesure d'assurer des communications optiques à ligne de visée multi-angle et bidirectionnelles, le système comprenant :

des moyens pour régler le positionnement du premier émetteur-récepteur pour moduler spatialement son profil de sensibilité selon un premier profil de modulation périodique prédéterminé ;
des moyens pour corréler un signal de rayonnement modulé reçu du deuxième appareil sur le premier appareil à l'aide de fonctions de corrélation respectives pour les erreurs d'alignement horizontal et vertical, afin de générer un premier vecteur d'erreur d'alignement ; et
des moyens pour régler la ligne de visée du premier appareil à l'aide du premier vecteur d'erreur d'alignement.

FIG. 1

FIG. 2

FIG. 3

FIG. 4

FIG. 5

Movement of the receiver sensitivity curve of A
compared to the center of transmitter B

603

Source of radiation
toward A

A

B

601

Apparent movement of the center of transmitter
B on the sensitivity curve of A

FIG. 6

FIG. 7

FIG. 8

FIG. 9

FIG. 10

FIG. 11

**EP 3 547 570 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102016111980 A1
- WO 2012109248 A1